# EUROPÄISCHE PATENTANMELDUNG

(11) **EP 3 750 614 A1**
(43) Veröffentlichungstag der Anmeldung: **16.12.2020**
(21) Anmeldenummer: 19179854.5
(22) Anmeldetag: 13.06.2019
(51) Int. Cl.: B01D 46/10, B01D 46/52

(54) **FILTER MIT SEPARATORBLECHEN MIT GEGENFALTUNG**

(71) Anmelder: Carl Freudenberg KG, 69469 Weinheim (DE)
(72) Erfinder: Ewald, Christian, 64668 Rimbach (DE); Tapper, Renate, 64625 Bensheim (DE); Becker, Jürgen, 67378 Zeiskam (DE)

(57) **Zusammenfassung**

Die Erfindung betrifft einen Filter (100) zur Reinigung von Luft (L) aufweisend ein Gehäuse (105), in dem Gehäuse (105) angeordnete Lagen eines Filtermediums (103) und Separatorbleche (10), wobei die Lagen des Filtermediums (103) beabstandet zueinander ausgerichtet sind und zwischen je zwei Lagen des Filtermediums (103) je ein Separatorblech (10) angeordnet ist, wobei die Separatorbleche (10) eine erste Faltung als zick-zack-förmige Parallelfaltung besitzen. Erfindungsgemäß ist ein jeweiliges Separatorblech (10) mindestens mit einer zweiten Faltung (12) als Gegenfaltung versehen. Vorteilhaft an einem solchen Separatorblech ist dessen größere Stabilität im Vergleich zu einem Separatorblech, welches nur Faltungen erster Art aufweist.

## Beschreibung

Die Erfindung betrifft einen Filter gemäß dem Oberbegriff von Anspruch 1.

### Stand der Technik

Filter in Form von Kassetten sind aus dem Stand der Technik bekannt. So ist in der WO 2017/008827 A1 ein Hochtemperatur-Kassettenfilter als HEPA-Filter gezeigt. Der Filter besitzt eine Mehrzahl von parallel zueinander angeordneten Lagen von Filtermedium, wobei Separatoren verwendet werden, um die Lagen auf Abstand zueinander zu halten. Die Separatoren bestehen aus zickzackförmig strukturiertem Metallblechen bzw. Metallfolien aus Aluminium oder Edelstahl.
Bekannt ist, dass die Metallseparatoren gefaltet (z.B. plissiert), geriffelt oder gewellt sein können.

Allgemein nachteilig an der Verwendung der bekannten Separatoren ist, dass diese den Luftstrom entlang des Filtermediums beeinflussen und den Druckverlust des Filters erhöhen.
Weiter nachteilig an den bekannten Separatoren ist, dass diese rechtwinklig ausgeführt sind, was eine strömungsungüstige Formgebung des Filtermediums ergibt. Auch ergeben sich dadurch Ecken, um welche das Filtermedium geführt werden muss. Wichtig ist, dass das Filtermedium gut an den Separatoren anliegt und durch diese gestützt wird. Handelt es sich um sprödes Filtermaterial, wie z. B. ein Glasfasermedium, so kann dieses leicht mechanisch beschädigt werden. Auch wichtig ist, dass die Separatoren eine gute Stabilität aufweisen.

### Aufgabenstellung

Aufgabe der vorliegenden Erfindung ist es einen Filter zu schaffen, der die Nachteile aus dem Stand der Technik zumindest reduziert. Weitere Aufgabe ist es, einen für Hochtemperaturanwendungen geeigneten Filter zu schaffen. Weitere Aufgabe ist es, eine besonders gute Abstützung des Filtermediums auf einem besonders stabilen Separator zu gewährleisten.

### Technische Lösung

Gelöst wird diese Aufgabe durch einen Filter mit den Merkmalen von Anspruch 1.

Der erfindungsgemäße Filter dient der Reinigung von durchströmender Luft und weist ein Gehäuse auf und in dem Gehäuse angeordnete Lagen eines Filtermediums und Separatorbleche, wobei die Lagen des Filtermediums überwiegend in etwa in Durchströmungsrichtung ausgerichtet sind und zwischen je zwei Lagen des Filtermediums je ein Separatorblech angeordnet ist, welches als Abstandshalter zwischen den beiden Lagen des Filtermediums wirkt. Es sind die Separatorbleche des Filters über ihre Fläche geriffelt, gewellt oder gefaltet, z.B. plissiert und bestehen insbesondere aus einer dicken Folie oder einem dünnen Blech. Diese Formgebung des Separatorblechs wird nachfolgend als erste Faltung bezeichnet. Unter dem Begriff Blech wird hier also auch eine dickere Folie verstanden. Die Höhe der Riffelung, Wellen bzw. Falten bewirkt dann den Abstand zwischen den beiden Lagen des Filtermediums. Unabhängig davon ob eine Riffelung, Wellen oder Falten das Separatorblech strukturieren, so wird dies nachfolgend unter dem Begriff Falten bzw. Faltung zusammengefasst.
Erfindungsgemäß wurde als vorteilhaft erkannt, die Separatorbleche mit einer Gegenfaltung zu versehen. Unter Faltung wird hierbei neben einer klassischen Faltung auch eine Riffelung oder Wellung verstanden.

Das Separatorblech des erfindungsgemäßen Filters besitzt ein gefaltetes Blech, wobei das Blech je zwei Längskanten und zwei Querkanten aufweist, d.h. eine Länge und eine Breite aufweist, und insbesondere rechteckig ist. Das Separatorblech besitzt eine erste Faltung als zickzackförmige Parallelfaltung. Diese erste Faltung ist dabei derart, dass sich Falzkanten erster Art parallel zu den Querkanten des Separatorblech erstrecken und zwischen Faltenbergen und Faltentälern Faltabschnitte erster Art ausgebildet werden. Beim Falzprodukt, welches durch die Faltung erster Art entsteht, weisen die Faltabschnitte erster Art vier Ecken auf, je zwei Ecken an einem Ende A und am anderen Ende B des Faltzabschnitts des Falzprodukts. Die Falzlängen der ersten Faltung, d. h. der Abstand zwischen Faltenberg und Faltental kann einheitlich sein, sodass alle Falzlängen den gleichen Wert aufweisen. Dann ergeben sich Faltabschnitte erster Art von gleicher Größe, welche insbesondere rechtwinklig sind. In vorteilhafter Weise ist das Blech des Separatorblechs zusätzlich mindestens mit einer zweiten Faltung als Gegenfaltung versehen. Die Gegenfaltung ist dabei derart, dass in den Faltabschnitten erster Art eine Falzkante zweiter Art vorliegt, wobei jede Falzkante zweiter Art in einem stumpfen Winkel α zur im Faltental liegenden Falzkante erster Art ausgerichtet ist. Dadurch werden Faltabschnitte zweiter Art ausgebildet, welche eine dreieckige Form aufweisen. Die Höhe des so entstehenden Separatorblechs - in Richtung der ursprünglichen Längskante des Blechs gesehen - ist an den beiden Enden A, B des Separatorblechs unterschiedlich. Auf der Seite des Separatorblechs A, auf welcher die zweite Faltung als Gegenfaltung eingebracht wurde, weist das Separatorblech eine geringere Höhe auf. Die bei der zweiten Faltung entstehenden Falzkanten zweiter Art bilden insbesondere Faltentäler aus und die zwischen zwei Faltabschnitten zweiter Art liegende Falzkante erster Art wird durch die Faltung zweiter Art jeweils zu einem Faltenberg ausgeformt. In anderen Worten: es wird durch die zweite Faltung eine erste Ecke des Faltabschnitts erster Art eingeschlagen, d.h. die Ecke wird so umgeschlagen, dass sie auf die Fläche des ersten Faltabschnitts abgelegt wird, es wird also durch die zweite Faltung eine erste Ecke des Faltabschnitts erster Art nach innen geklappt, d.h. die Falzkante erster Art wird im Bereich der Faltung zweiter Art in die entgegengesetzte Richtung gefaltet.

Vorteilhaft an einem solchen Separatorblech ist dessen größere Stabilität im Vergleich zu einem Separatorblech, welches nur Faltungen erster Art aufweist. Auch die trapezförmige Ausgestaltung der Separatorbleche ist vorteilhaft, da so ein geringerer Druckverlust im Filter erreicht werden kann.

Bei der Verwendung der Begrifflichkeiten "Faltental" und "Faltenberg" ist folgendes zu beachten: Die Position des Betrachters bezüglich des Separatorblechs und sein Blickwinkel darauf entscheiden darüber, ob es sich bei einer Falzkante um einen Faltenberg oder ein Faltental handelt. Wird beispielsweise das Separatorblech um 180 Grad gewendet, so wird aus einem Faltental ein Faltenberg und umgekehrt. Bei der bisherigen sowie bei der zukünftigen Verwendung der Begrifflichkeiten "Faltenberg" und "Faltental" soll diese ausschließlich einer eindeutigen Beschreibung des Separatorblech dienen. Es soll keine dahingehende Beschränkung eingeführt werden, dass das Separatorblech nur in einer bestimmten Einbaulage sichtbar sein könne oder verwendet werden dürfe.

In einer vorteilhaften Weiterbildung des erfindungsgemäßen Filters erstrecken sich die Falzkanten zweiter Art des Separatorblechs in der Querrichtung des Blechs über ganze Breite des Blechs, sodass sich in der Seitenansicht des gefalteten Separatorblechs eine verjüngende Höhe ergibt.

In Weiterbildung kann eine weitere Gegenfaltung vorgesehen sein. Diese Gegenfaltung ist dabei derart, dass in jedem Faltabschnitt erster Art eine weitere Falzkante vorliegt, wobei diese Falzkante in einem stumpfen Winkel β zur im Faltenberg liegenden Falzkante erster Art ausgerichtet ist, so dass weitere dreieckige Faltabschnitte ausgebildet werden. Die Faltung ist dabei derart, dass die weiteren Falzkanten Faltenberge ausbilden und die zwischen zwei solcher weiterer dreieckiger Faltabschnitte liegende Falzkante erster Art in ein Faltental umgeformt ist. Durch diese weitere Gegenfaltung wird die gleiche Längskante des Faltabschnitts erster Art geteilt, wie durch die Faltung zweiter Art. Die so gefalteten Separatorbleche besitzen an dem Ende A, an welchem die weitere Gegenfaltung eingebracht ist, damit eine Spitze. In anderen Worten: es wird nicht nur eine erste Ecke des Faltabschnitts erster Art sondern auch noch die zweite Ecke des Faltabschnitts erster Art eingeschlagen bzw. nach innen geklappt, welche ebenfalls am selben Ende A des Faltabschnittes erster Art liegt.

Um die Höhe des Separatorblechs im Bereich des bereits mit einer Gegenfaltung versehenen Endes weiter reduzieren zu können und um ein Überstehen von Faltabschnitten zweiter Art über die Falzkanten erster Art hinaus zu vermeiden, wurde es als vorteilhaft erkannt, das Separatorblech mit einer weiteren Gegenfaltung zu versehen, einer Faltung dritter Art. Diese ist als Gegenfaltung in die dreieckigen Faltabschnitte zweiter Art eingebracht.

In einer vorteilhaften Weiterbildung des erfindungsgemäßen Filters sind die Separatorbleche zusätzlich mit mindestens einer gebördelten Kante versehen, d.h. das Blech ist im Bereich der Kante mindestens ein Mal umgeschlagen. Dies dient zur Versteifung der Kante und zur Stabilisierung des Separatorblechs. Dank der gebördelten Kante kann bei gleichbleibender Stabilität ein Blech geringerer Dicke zur Herstellung der Separatorbleche verwendet werden.

Besonders vorteilhaft ist es, wenn die Separatorbleche aus Aluminium gefertigt sind. Derartige Separatorbleche sind relativ leicht und weisen gleichzeitig eine gute Stabilität und Festigkeit auf.

In einer besonders vorteilhaften und daher bevorzugten Ausführung des Filters ist das Filtermedium plissiert und/oder ein Glasfasermedium, zum Beispiel ein Glasfaserpapier oder ein Mikroglasfaserpapier. Ein solcher Filter weist in vorteilhafter Weise eine große wirksame Filtrationsfläche auf und kann auch bei höheren Temperaturen der zu filternden Luft eingesetzt werden.

Bei dem Filter kann es sich in vorteilhafter Weise um einen Kassettenfilter handeln. Insbesondere um einen HEPA-Filter zur Anwendung in Reinraumanlagen von Lebensmittel- und Pharmaindustrie, der Mikrochipherstellung oder in Kliniken.

Auch könnte der Filter als Hochtemperaturfilter ausgelegt sein für Anwendungen von über 100 Grad Celsius. Dazu kann als Material für die Separatoren Aluminium und als Filtermaterial ein Glasfaserpapier verwendet werden. Ein solcher Hochtemperaturfilter kann zum Beispiel in industriellen Trocknungsanlagen, wie Lacktrocknungsanlagen der Automobilindustrie, zum Einsatz gelangen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

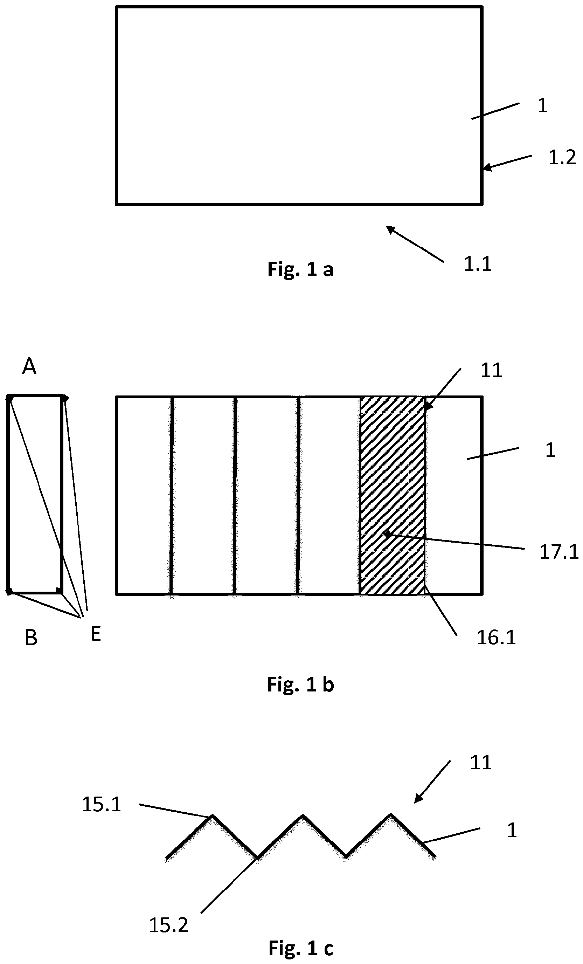

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1b: ein Blech
- Fig. 1b und c: das Separatorblech mit einer ersten Faltung
- Fig. 2a und b: räumliche Ansichten des Separatorblech mit einer Faltung zweiter Art als Gegenfaltung
- Fig. 3a, b und c: eine räumliche Ansicht des Separatorblech mit einer weiteren Gegenfaltung
- Fig. 4: eine räumliche Ansicht des Separatorblech mit einer Faltung dritter Art als weiteren Gegenfaltung
- Fig. 5: einen Filter gemäß der Erfindung

Figur 1a zeigt ein rechteckiges Blech 1 mit einer kürzeren Querkante 1.2 und einer längeren Längskante 1.1. Dieses Blech erhält eine erste Faltung 11, nämlich eine Parallelfaltung, welche auch als Leporello-Faltung bezeichnet wird. Das Blech 1 wird also plissiert. Die Faltung erster Art 11 geht aus den Figuren 1b und 1c hervor. Wie in Figur 1b dargestellt, werden durch die erste Faltung 11 parallel zueinander liegende Falzkanten erster Art 16.1 erzeugt und Falzabschnitte erster Art 17.1, welche jeweils von zwei Falzkanten erster Art 16.1 bzw. von einer Falzkante erster Art 16.1 und der Querkante 1.2 begrenzt werden. Um die Lage eines Faltabschnitts erster Art 17.1 zu verdeutlichen, ist dieser schraffiert dargestellt.Durch die Faltung erster Art 11 entstehen - wie in Figur 1c dargestellt - Faltenberge 15.1 und Faltentäler 15.2. Beim Separatorblech, welches durch die Faltung erster Art 11 entsteht, weisen die Faltabschnitte erster Art 17.1 vier Ecken auf, je zwei Ecken an einem Ende A und am anderen Ende B des Faltzabschnitts 17.1 des Falzprodukts. Die Ecken E sind in Fig. 1b links in der Seitenansicht des Separatorblechs dargestellt.

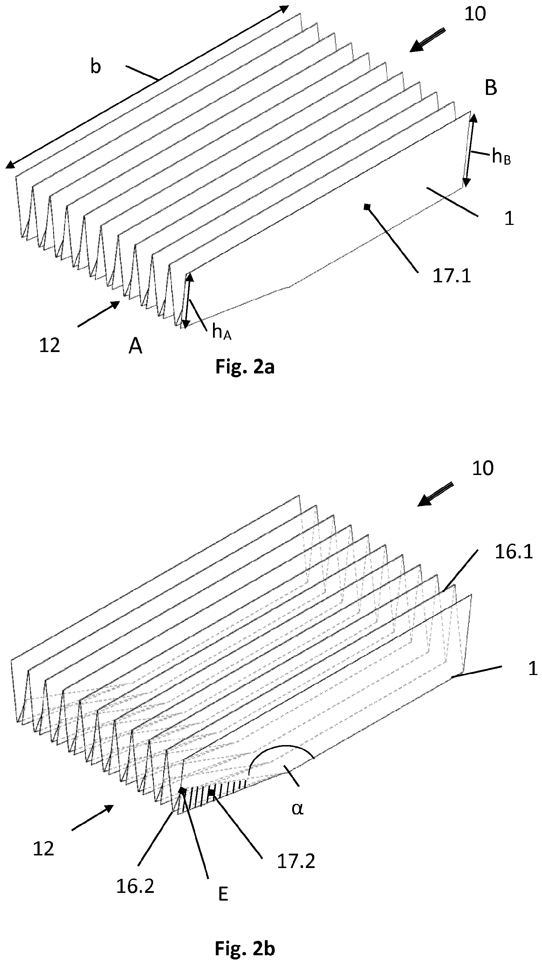

Erfindungsgemäß wird ein mit einer solchen ersten Faltung 11 versehenes Blech 1 durch mindestens eine weitere Faltung 12, weiterbearbeitet. Unterschiedliche Varianten eines erfindungsgemäßen Separatorblechs 10 mit einer ersten Faltung 11 und mindestens einer weiteren Faltung 12, 13, 14 sind in den nachfolgend beschriebenen Figuren 2 - 4 abgebildet.

In dem in den Figuren 2a und b dargestellten Separatorblech 10 ist das Blech 1 am Ende A des Falzabschnittes erster Art 17.1 mit einer zweiten Faltung 12 als Gegenfaltung versehen. Dabei wurde in jedem Faltabschnitt erster Art 17.1 eine Falzkante zweiter Art 16.2 erzeugt, wobei die Faltung 12 derart ist, dass jede Falzkante zweiter Art 16.2 in einem stumpfen Winkel α zur im Faltental 15.2 liegenden Falzkante erster Art 16.1 ausgerichtet ist (siehe Figur 2b). Durch die zweite Faltung 12 werden Faltabschnitte zweiter Art ausgebildet, welche eine dreieckige Form 17.2 aufweisen. Um die Lage eines dreieckigen Faltabschnitts zweiter Art 17.2 zu verdeutlichen, ist dieser schraffiert dargestellt. In anderen Worten: es wird durch die zweite Faltung 12 eine erste Ecke E des Faltabschnitts erster Art 17.1 eingeschlagen bzw. nach innen geklappt, d.h. die Ecke E wird so umgeschlagen, dass sie auf die Fläche des ersten Faltabschnitts 17.1 abgelegt wird.
Die zweite Faltung 12 und die Falzkanten zweiter Art 16.2 erstrecken sich in der in den Figuren 2a und 2b dargestellten Ausführungsvariante nur über einen kleinen Teil der Breite b des Separatorblechs 10.

Durch die zweite Faltung 12 ergibt sich, dass das Separatorblech 10 im Bereich der zweiten Faltung 12 am Ende A eine geringere Höhe h_{A} aufweist, als die Höhe h_{B} am Ende B des Separatorblechs 10.

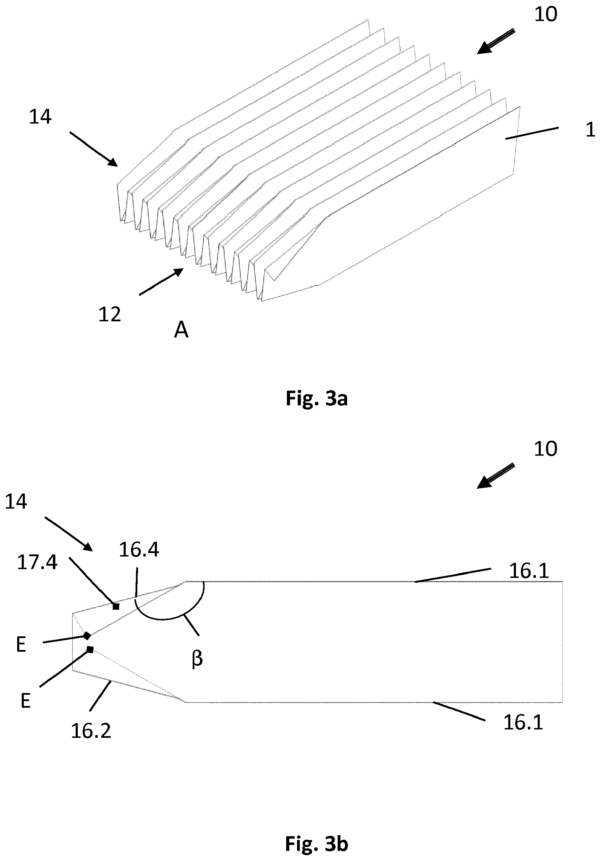

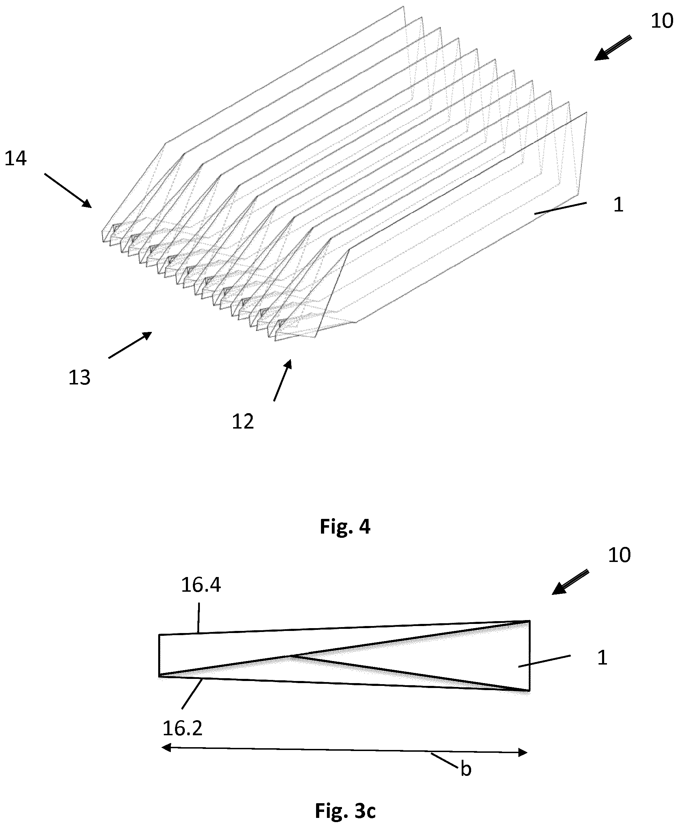

Das in den Figuren 3a und 3b dargestellte Separatorblech 10 wurde ausgehend vom Separatorblech 10, wie in den Figuren 2a und 2b dargestellt, mit einer weiteren Gegenfaltung 14 versehen. Die weitere Gegenfaltung 14 ist dabei derart, dass eine weitere Falzkante 16.4 vorliegt, wobei diese Falzkante 16.4 in einem stumpfen Winkel β zur im Faltenberg 15.1 liegenden Falzkante erster Art 16.1 ausgerichtet ist. In anderen Worten: es wird nicht nur eine erste Ecke E des Faltabschnitts erster Art 17.1 sondern auch noch die zweite Ecke E des Faltabschnitts erster Art 17.1 eingeschlagen bzw. nach innen geklappt, welche ebenfalls am selben Ende A des Faltabschnittes erster Art 17.1 liegt. Durch die weitere Gegenfaltung 14 ergeben sich so weitere dreieckige Faltabschnitte 17.4. In dem Bereich des Separatorblechs 10, in welchem das Blech 1 mit der zweiten Faltung 12 und der weiteren Gegenfaltung 14 versehen ist, ist das Separatorblech 10 - in seiner Seitenansicht -zulaufend mit verjüngender Höhe ausgeführt.
Das in den Figure 3c dargestellte Separatorblech 10 ist eine Abwandung des Separatorblechs 10 aus den Figuren 3a und b: die Falzkanten 16.2 und 16.4 erstrecken sich über die gesamte Breite b, sodass über die Breite b keine Kanten bestehen.

Gemäß dem in Figur 4 dargestellten Separatorblech 10 wurde das Blech 1 zusätzlich mit einer Faltung dritter Art 13 versehen, welche als Gegenfaltung 13 in die dreieckigen Faltabschnitte zweiter Art 17.2 eingebracht ist. Dank der zweiten Faltung 12, der dritten Faltung 13 und der weiteren Gegenfaltung 14, welche alle an einem Ende A des Separatorblechs 10 eingebracht sind, kann die Höhe des Separatorblechs 10 in diesem Bereich stark verringert werden.

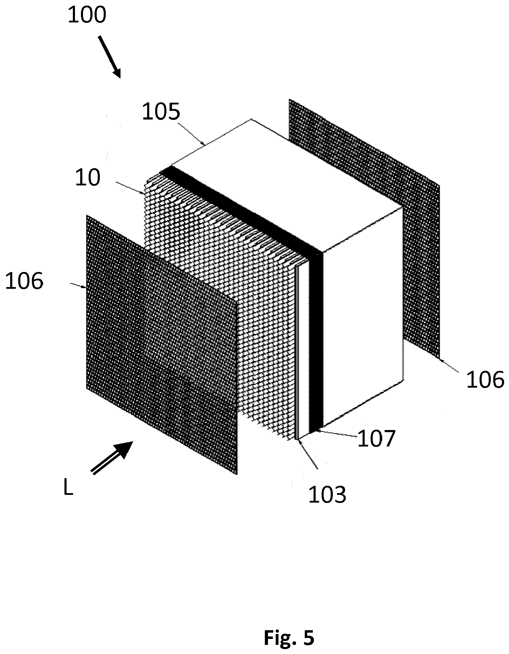

In Figur 5 ist beispielhaft ein erfindungsgemäßer Filter 100 in einer Explosionszeichnung dargestellt.
Der Filter 100 besitzt einen Rahmen 105, in welchem eine Vielzahl von Lagen Filtermedium 103 angeordnet sind und von einem Luftstrom L durchströmt und der Lufstsrom L dabei gereinigt werden kann. Zwischen je zwei Lagen des Filtermediums 103 ist je ein an Hand der anderen Figuren beschriebenes Separatorblech 10 positioniert, welches verhindert, dass zwei Lagen des Filtermediums 103 aneinander anliegen. Um das Filtermedium 103 zu schützen und in dem Filter 100 zu halten sind an den beiden offenen Seiten des Filters 100 Metallgitter 106 vorgesehen. Eine Dichtung 107 ist zwischen dem Rahmen 105 und dem Filtermedium 103 angeordnet und verhindert eine Leckage zwischen dem Filtermedium 103 und dem Rahmen 105.

### Bezugszeichenliste

- 1: Blech
- 1.1: Längskante
- 1.2: Querkante

- 11: erste Faltung / Faltung erster Art
- 12: zweite Faltung / Faltung zweiter Art
- 13: dritte Faltung / Faltung dritter Art
- 14: weitere Faltung / Faltung weiterer Art
- 15.1: Faltenberg
- 15.2: Faltental
- 16.1: Falzkante erster Art
- 16.2: Falzkante zweiter Art
- 16.4: Falzkante weiterer Art
- 17.1: Faltabschnitt erster Art
- 17.2: Faltabschnitt zweiter Art
- 17.4: Faltabschnitt weiterer Art

- 100: Filter
- 103: Lage Filtermedium
- 105: Rahmen
- 106: Metallgitter
- 107: Dichtung

- b: Breite des Separatorblechs

- A: Ende des Separatorblechs
- B: anderes Ende des Separatorblechs
- E: Ecke des Separatorblechs
- L: Luftstrom

- α: Winkel zwischen Falzkante erster Art und zweiter Art
- β: Winkel zwischen weiterer Falzkante und Falzkante erster Art

## Patentansprüche

1. Filter (100) zur Reinigung von Luft (L) aufweisend ein Gehäuse (105), in dem Gehäuse (105) angeordnete Lagen eines Filtermediums (103) und Separatorbleche (10), wobei die Lagen des Filtermediums (103) beabstandet zueinander ausgerichtet sind und zwischen je zwei Lagen des Filtermediums (103) je ein Separatorblech (10) angeordnet ist, wobei die Separatorbleche (10) eine erste Faltung als zick-zack-förmige Parallelfaltung besitzen derart, dass sich Falzkanten erster Art parallel zu den Querkanten (1.2) eines jeweiligen Separatorblechs erstrecken und zwischen Faltenbergen (15.1) und Faltentälern (15.2) Faltabschnitte erster Art (17:1) ausgebildet
**dadurch gekennzeichnet,**
**dass** ein jeweiliges Separatorblech (10) mindestens mit einer zweiten Faltung (12) als Gegenfaltung versehen ist, wobei in jedem Faltabschnitt erster Art (17.1) eine Falzkante zweiter Art (16.2) vorliegt, wobei jede Falzkante zweiter Art (16.2) in einem stumpfen Winkel (a) zur im Faltental (15.2) liegenden Falzkante erster Art (16.1) ausgerichtet ist, derart, dass dreieckige Faltabschnitte zweiter Art (17.2) ausgebildet werden.

2. Filter nach Anspruch 1 **dadurch gekennzeichnet,**
**dass** die Falzkanten zweiter Art (16.2) Faltentäler (15.2) ausbilden und die zwischen zwei Faltabschnitten zweiter Art (17.2) liegende Falzkante erster Art (16.1) einen Faltenberg (15.1) ausbildet.

3. Filter nach einem der vorangehenden Ansprüche **dadurch**
**gekennzeichnet,**
**dass** sich die Falzkanten zweiter Art (16.2) über die ganze Breite (b) eines jeweiligen Separatorblechs (10) erstrecken, sodass sich eine kontinuierlich verändernde Höhe (h_{A},h_{B}) von einem Ende (A) zum anderen Ende (B) des Separatorblechs (10) ergibt.

4. Filter nach einem der vorangehenden Ansprüche **dadurch**
**gekennzeichnet,**
**dass** ein jeweiliges Separatorblech (10) mit mindestens einer weiteren zweiten Faltung (12, 14) als Gegenfaltung versehen ist, wobei diese zumindest eine weitere Ecke (E) des Faltabschnitts erster Art (17.1) einschlägt bzw. nach innen klappt, wobei die weitere Ecke (E) insbesondere am selben Ende (A) des Faltabschnittes erster Art (17.1) liegt, in welcher die zweite Faltung (12) als Gegenfaltung eingebracht ist.

5. Filter nach einem der vorangehenden Ansprüche, **dadurch**
**gekennzeichnet,**
**dass** die Separatorbleche (10) mit mindestens einer gebördelten Kante versehen sind.

6. Filter nach einem der vorangehenden Ansprüche, **dadurch**
**gekennzeichnet,**
**dass** die Separatorbleche (10) aus Aluminium sind.

7. Filter nach einem der vorangehenden Ansprüche, **dadurch**
**gekennzeichnet,**
**dass** das Filtermedium (103) aus einem Glasfasermedium ist.

8. Filter nach einem der vorangehenden Ansprüche, **dadurch**
**gekennzeichnet,**
**dass** es sich bei dem Filter (100) um einen Kassettenfilter handelt.

9. Filter nach einem der vorangehenden Ansprüche, **dadurch**
**gekennzeichnet,**
**dass** der Filter (100) als Hochtemperaturfilter ausgelegt ist.
